Europäisches Patentamt

European Patent Office

Office européen des brevets

(11) Publication number: **0 161 109**
**A2**

## (12) EUROPEAN PATENT APPLICATION

(21) Application number: **85303209.2**

(22) Date of filing: **07.05.85**

(51) Int. Cl.⁴: **H 02 J 7/10**

(30) Priority: **05.05.84 GB 8411581**

(43) Date of publication of application:
**13.11.85 Bulletin 85/46**

(84) Designated Contracting States:
**AT BE CH DE FR GB IT LI LU NL SE**

(71) Applicant: **Newton Derby Limited**
**Alfreton Road**
**Derby DE2 4AG(GB)**

(72) Inventor: **Gibson, David Ronald**
**18 Kedleston Close**
**Allestreet Derby(GB)**

(74) Representative: **Pacitti, Pierpaolo Alfonso M.E. et al,**
**Ian G. Murgitroyd and Company 49 Bath Street**
**Glasgow G2 2DL(GB)**

(54) Battery charger.

(57) There is disclosed a battery charger for supplying a rectified a.c. voltage to a battery to be charged, said voltage being fed to the battery through a semi-conductor switch which is, in turn, controlled by a control signal representative of the state of charge of the battery.

Fig.1

"Battery Charger"

This invention relates to a battery charger.

Hitherto proposed battery chargers incorporate a so called "trickle" charge facility which passes a small current through the battery continuously once it is fully charged. This has proved to reduce the capacity of the batteries (thus shortening service life) and also cause 'gassing' to take place. If continuous gassing takes place, the electrolyte levels will drop and thus the battery requires "topping up". In standby systems the batteries may be inaccessible and topping up difficult.

It is an object of the present invention to provide a battery charger which obviates or mitigates the disadvantages of hitherto proposed designs.

According to the present invention there is provided a battery charger comprising means for supplying a rectified a.c. voltage to a battery to be charged, means for generating a control signal representative of the state of charge of the battery, said control signal controlling the conduction of a semi-conductor switch through which said rectified a.c. voltage is fed to the battery.

Further according to the present invention there is provided a method of charging a battery comprising the steps of feeding a rectified a.c. voltage to the battery through a semi-conductor switch, generating a control signal representative of the state of charge of the battery, and controlling the conduction of said semi-conductor switch using said control signal.

Preferably, said control signal is generated by comparing a signal representative of the terminal voltage of the battery with a reference voltage, said battery terminal voltage being measured during a zero-crossing of the charging a.c. voltage.

Embodiments of the present invention will now be described, by way of example, with reference to the accompanying drawing, in which:-

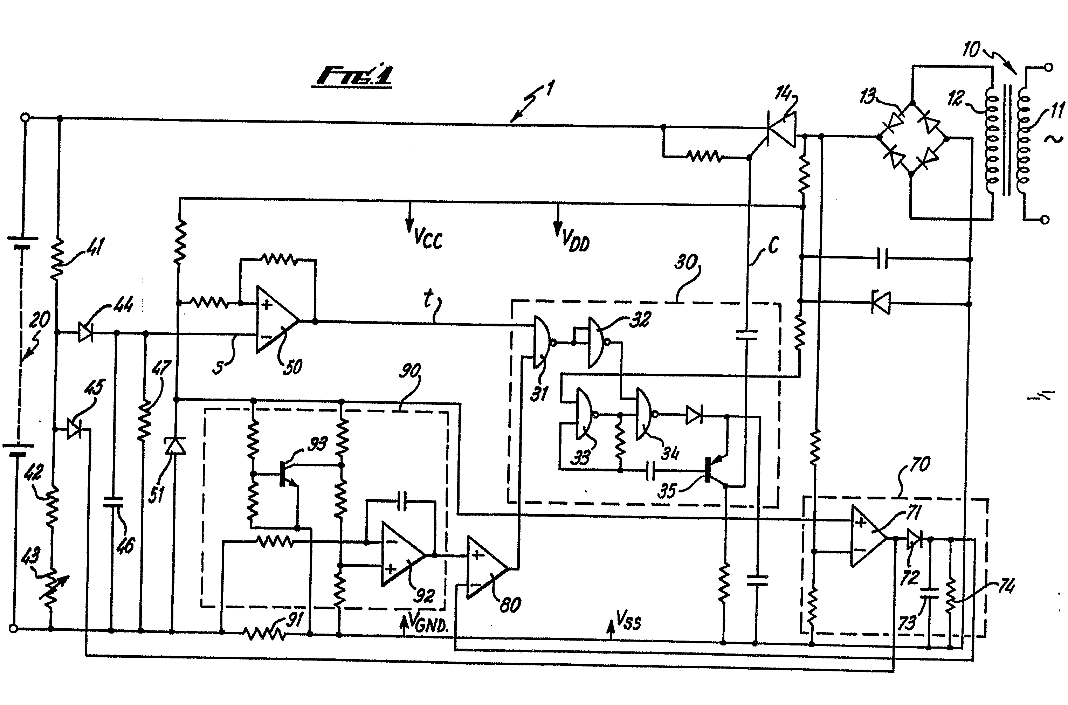

Fig. 1 is a circuit diagram of a battery charger made in accordance with the present invention.

Referring to the drawing, a battery charger indicated generally at 1, comprises a transformer 10, the primary 11 of which is connected to an a.c. mains power supply and the secondary 12 of which feeds a full-wave rectifier 13. The output of the rectifier 13 is fed to a battery 20 to be charged through a semi-conductor switch in the form of a thyristor 14.

The thyristor 14 is triggered by a control signal $c$ output from a logic control circuit 30, comprising logic gates 31,32; logic gates 33,34; and an output transistor 35.

A signal $s$, representative of the state of charge of the battery, that is, the battery terminal voltage, is derived from a voltage divider made up of resistors 41,42 and variable resistor 43. This voltage is clamped by a sampling diode 45 driven from zero crossing detector circuit 70. The peak voltage representative of the battery e.m.f. is passed by a diode 44 and held on a capacitor 46 with leak resistor 47. The voltage across a resistor 47 is fed to the inverting input of a comparator/amplifier 50, to the non-inverting input of which there is applied a reference voltage obtained from a zener diode 51. The output of comparator/amplifier 50 is fed to one of the inputs of logic gate 31 of the logic control circuit 30.

The zero crossing detector circuit 70 includes an amplifier 71, to the non-inverting input of which there is applied a reference voltage from zener diode 51 and to the inverting input of which there is fed the output of rectifier 13. The output of amplifier 71 is a positive pulse during zero crossings of the a.c. supply, and this signal is fed to the input sampling diode 45. A saw-tooth waveform developed by a network comprising diode 72, capacitor 73 and resistor 74 is fed to the inverting input of an enable/disenable control gate 80. The output of the gate 80 is fed to the other of the inputs of gate 31 of the logic control circuit 30.

When the battery is discharged, the logic control circuit 30 is disenabled and the gate of the thyristor 14 is continuously fed with trigger pulses from output transistor 35 and the thyristor 14 is non-conductive only when the output of the rectifier 13 falls below the e.m.f. of the battery 20.

When the e.m.f. of the battery 20 reaches a certain level indicating almost full charge, the output $t$ of the comparator/amplifier 50 causes, through logic gates 31-34, the output transistor 35 of the logic control circuit 30 to stop triggering of the thyristor 14. When the battery voltage falls below about 95 per cent of full charge value the gate pulse generator 33, 34 and 35 is enabled and the thyristor 14 is fired. The charging current is limited by the leakage reactance of transformer 10 and a current limit and transformer temperature limit circuit 90. This circuit controls the firing angle of thyristor 14.

The circuit 90 on the one hand, prevents damage to the battery due to high charging currents and, on the other hand, permits use of a low rated transformer 10.

The current limiting circuit 90 has a current sensing shunt resistor 91 which feeds an output amplifier 92 the output of which is fed to the non-inverting input of the control gate 80. When the charging current tends to exceed a pre-set limit, the control gate 80 acts to enable the logic control circuit 30 to delay triggering of the thyristor 14.

The current limiting circuit 90 includes a thermally coupled transistor 93, which is embedded in the transformer 10. When the temperature of the windings of the transformer 10 exceeds the rated value, the transfer characteristics of the transistor 93 alter, resulting in the output amplifier 92 causing the control gate 80 to enable the logic control circuit 30 to delay triggering of the thyristor 14. Thus, there has been provided a battery charger which acts to charge a battery in as short a period as possible whilst minimising 'gassing'. By sensing the battery terminal voltage during zero crossings of the mains, the charger measures the actual e.m.f. of the battery and not the charger output. Since no current is flowing through the charging leads, no volt drop is present in them and the leads can be as long as required.

Modifications and improvements may be made without departing from the scope of the invention.

For example, other battery parameters such as electrolight temperature, rate of gasing, internal resistance could be measured to generated a control signal for controlling the firing angle of the thyristor 14. In this way the charging rate for any parcicular battery may be set to maximise boost charging without battery damage.

## CLAIMS

1. A battery charger comprising means for supplying a rectified a.c. voltage to a battery to be charged, means for generating a control signal representative of the state of charge of the battery, said control signal controlling the conduction of a semi-conductor switch through which said rectified a.c. voltage is fed to the battery.

2. A battery charger as claimed in claim 1, wherein said means for generating a control signal includes a zero crossing detector circuit and a logic control circuit.

3. A battery charger as claimed in claim 2, wherein said zero crossing detector circuit includes an amplifier to the non-inverting input of which there is applied a reference voltage and to the inverting input of which there is applied said rectified a.c. voltage.

4. A battery charger as claimed in either claim 2 or claim 3, wherein said logic control circuit receives an input representative of the state of charge of the battery.

5. A battery charger as claimed in claim 4, wherein said input representative of the state of charge of the battery is the battery terminal voltage.

6. A battery charger as claimed any preceding claim, wherein there is included a current limiting circuit for inhibiting said control signal on occurrence of a fault condition.

7. A battery charger as claimed in claim 6, wherein said fault condition is excessive charging current.

8. A battery charger as claimed in claim 6, wherein said fault condition is excessive heating of a transformer forming part of the a.c. voltage supply means.

9. A method of charging a battery comprising the steps of feeding a rectified a.c. voltage to the battery through a semi-conductor switch, generating a control signal representative of the state of charge of the battery, and controlling the conduction of said semi-conductor switch using said control signal.

10. A method as claimed in claim 9, wherein said control signal is generated by comparing a signal representative of the terminal voltage of the battery with a reference voltage, said battery terminal voltage being measured during a zero-crossing of the charging a.c. voltage.

MURGITROYD AND COMPANY
CHARTERED PATENT AGENTS
49 BATH STREET
GLASGOW G2 2DL

FIG.1